# EUROPÄISCHE PATENTSCHRIFT

(11) **EP 1 693 587 B1**
(45) Veröffentlichungstag und Bekanntmachung des Hinweises auf die Patenterteilung: **16.04.2008**
(21) Anmeldenummer: 06003166.3
(22) Anmeldetag: 16.02.2006
(51) Int. Cl.: F16D 7/02

(54) **Welle-Nabeverbindung mit einer ein Rutschmoment aufnehmenden Buchse**
Shaft-hub connection with a slip moment absorbing bush
Accouplement arbre-moyeu avec un coussinet pour l'amortissement de couple de glissement

(30) Priorität: 17.02.2005 DE 102005007525
(43) Veröffentlichungstag der Anmeldung: 23.08.2006
(73) Patentinhaber: ATEC-Weiss GmbH & Co. KG, D-48691 Vreden (DE); A. FRIEDR. FLENDER AG, 46395 Bocholt (DE)
(72) Erfinder: Weiss, Rudolf, 48691 Vreden (DE); Peters, Robert, 46399 Bocholt (DE)
(74) Vertreter: Meyer, Hans-Joachim

(56) Entgegenhaltungen:
- DE-B- 1 208 564
- GB-A- 996 911
- US-A- 4 738 151
- US-A- 5 632 684

## Beschreibung

Die Erfindung betrifft eine Welle-Nabeverbindung mit einer Nabe, die einem kegelförmigen Endabschnitt einer Welle zugeordnet ist und Nabenabschnitte mit unterschiedlichem mittleren Außendurchmesser aufweist, und einer ein Rutschmoment aufnehmenden Buchse, die eine dem kegelförmigen Wellenendabschnitt zugeordnete Kegelsitzfläche aufweist, wobei zwischen Nabe und Buchse ein Zylindersitz ausgebildet ist und die Nabe und die Buchse im auf dem Wellenendabschnitt montierten Zustand kraftschlüssig miteinander verbunden sind.

Derartige Welle-Nabeverbindungen sind bekannt. Sie dienen als Überlastschutz, um drehverbundene Maschinenteile vor Überlastschäden, die durch kurzzeitig auftretende Drehmomentstöße verursacht werden, zu schützen.

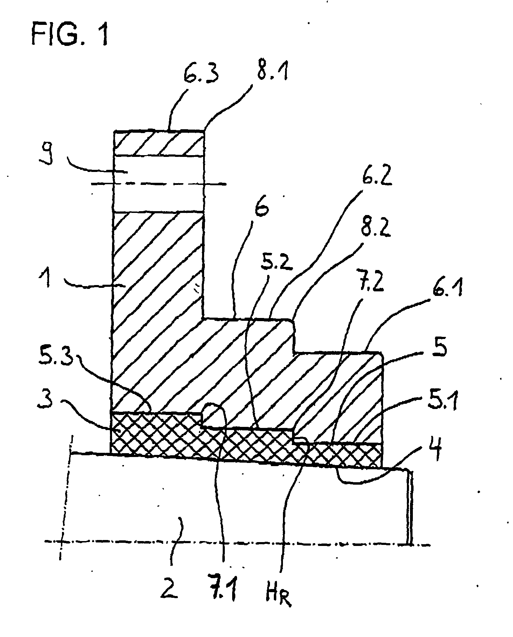

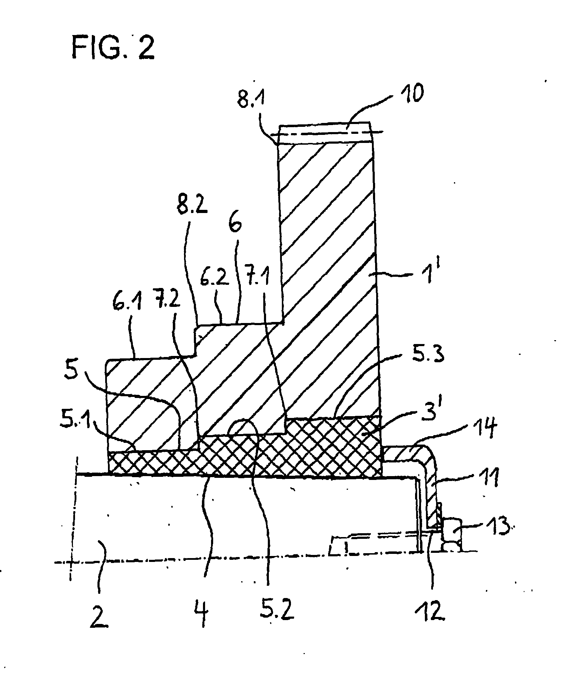

Die gattungsgemäße GB 996,911 offenbart eine Überlastkupplung, bei der eine Nabe auf einen Wellenzapfen aufgeschrumpft ist, wobei zwischen Nabe und Wellenzapfen eine Buchse angeordnet ist. In dem dort gezeigten Ausführungsbeispiel ist zwischen dem Wellenzapfen und der Buchse ein Zylinderpresssitz und zwischen der Buchse und der Nabe ein Kegelpresssitz ausgebildet. In der Beschreibung der Zeichnung ist allerdings darauf hingewiesen, dass gegebenenfalls auch der wellenzapfen kegelförmig ausgebildet und die Buchse mit einer entsprechenden inneren Kegelsitzfläche versehen werden kann; d.h. in diesem Fall wäre zwischen Wellenzapfen und Buchse ein Kegelpresssitz und zwischen Buchse und Nabe ein Zylinderpresssitz vorhanden. Alternativ können auch beide Seiten der Buchse konisch ausgebildet sein, so dass dann sowohl zwischen Wellenzapfen und Buchse als auch zwischen Buchse und Nabe jeweils ein Kegelpresssitz vorhanden ist (vgl. Figuren 1 und 2 sowie Seite 2, Zeilen 69 - 72).

Aufgrund des Kegelsitzes zwischen Wellenzapfen und Buchse ergibt sich für den Außendurchmesser der Buchse ein über die Länge der Buchse im Wesentlichen gleiches Aufdehnmaß. Hat die aufgesetzte Nabe unterschiedliche Außendurchmesser, wird allerdings keine gleichmäßige Flächenpressung zwischen Nabe und Buchse erreicht und es kommt unter Umständen zu Fresserscheinungen.

Die DE 1 208 564 B offenbart eine Welle-Nabenverbindung mit stufenförmige Ausbildung des Zylindersitzes, wobei keine Buchse vorhanden ist.

Der vorliegenden Erfindung liegt die Aufgabe zugrunde, eine Welle-Nabeverbindung der eingangs genannten Art dahingehend weiterzuentwickeln, dass die am Zylinderpresssitz zwischen Nabe und Buchse auftretenden unterschiedlichen Spannungen besser ausgeglichen werden als es bei herkömmlichen Welle-Nabeverbindungen dieser Art der Fall ist.

Diese Aufgabe wird erfindungsgemäß durch eine Welle-Nabeverbindung mit den Merkmalen des Anspruchs 1 gelöst.

Die erfindungsgemäße Welle-Nabeverbindung ist im Wesentlichen dadurch gekennzeichnet, dass der Zylindersitz zwischen Nabe und Buchse stufenförmig ausgebildet ist, derart, dass an einer Stufe des Zylindersitzes, die einem Nabenabschnitt gegenüberliegt, dessen mittlerer Außendurchmesser größer ist als der mittlere Außendurchmesser eines benachbarten Nabenabschnittes, der einer benachbarten Stufe des Zylindersitzes gegenüberliegt, ein Übermaß zwischen Nabe und Buchse vorhanden ist, welches kleiner als ein Übermaß zwischen Nabe und Buchse an der benachbarten Stufe des Zylindersitzes ist, die dem benachbarten Nabenabschnitt mit kleinerem mittleren Außendurchmesser gegenüberliegt.

Der Zylindersitz zwischen der Nabe und der Buchse der erfindungsgemäßen Welle-Nabeverbindung ist wenigstens zweistufig, vorzugsweise wenigstens dreistufig ausgeführt. Die mehrstufige Ausführung des Zylindersitzes in Verbindung mit den unterschiedlichen Passungen an den zylindrischen Stufenflächen (Mantelflächen) vergleichmäßigt die Flächenpressung über den Zylindersitz und verbessert somit die Dauerfestigkeit der Welle-Nabeverbindung.

Die Montage der erfindungsgemäßen Welle-Nabeverbindung ist einfach und unkompliziert. Durch die konische Ausgestaltung des Wellenendes und der zugeordneten Innenmantelfläche der Buchse wird ein Klemmsitz zwischen Welle und Buchse erreicht, der einen Schlupf zwischen Buchse und Welle zuverlässig verhindert, während der stufenförmige Sitz zwischen Nabe und Buchse ein Gleiten der Nabe auf der Buchse bei Überschreitung des vorgegebenen Drehmoments zulässt. Somit werden an der Welle Oberflächenschäden, z.B. Riefen, die bei herkömmlichen Welle-Nabeverbindungen mit einer zwischengeschalteten zylindrischen Gleitbuchse auftreten können, sicher ausgeschlossen.

Eine bevorzugte Ausgestaltung der erfindungsgemäßen Welle-Nabeverbindung ist dadurch gekennzeichnet, dass der Zylindersitz zwischen Nabe und Buchse in der Weise abgestuft ist, dass die axiale Tiefe der jeweiligen Stufe mindestens das Dreifache der radialen Absatzhöhe zur benachbarten Stufe beträgt.

Weitere bevorzugte und vorteilhafte Ausgestaltungen der erfindungsgemäßen Welle-Nabeverbindung sind in den Unteransprüchen angegeben.

Im Folgenden wird die Erfindung anhand einer Ausführungsbeispiele darstellenden Zeichnung näher erläutert. Es zeigen:
- Fig. 1: ein erstes Ausführungsbeispiel einer erfindungsgemäßen Welle-Nabeverbindung in seitlicher Schnittansicht, wobei der Einfachheit halber nur die obere Hälfte der Welle-Nabeverbindung dargestellt ist;
- Fig. 2: ein zweites Ausführungsbeispiel einer erfindungsgemäßen Welle-Nabeverbindung, wobei wiederum lediglich die obere Hälfte in seitlicher Schnittansicht dargestellt ist; und
- Fig. 3: ein drittes Ausführungsbeispiel einer erfindungsgemäßen Welle-Nabeverbindung, wobei wiederum lediglich die obere Hälfte in seitlicher Schnittansicht dargestellt ist.

Die in Fig. 1 dargestellte Welle-Nabeverbindung besteht aus einer Nabe 1, die einem kegelförmigen Endabschnitt 2 einer Welle zugeordnet ist, und einer zwischen Nabe 1 und Welle angeordneten, ein Rutschmoment aufnehmenden Buchse 3. Die Buchse 3 ist beispielsweise aus Bronze gefertigt und weist eine dem Wellenendabschnitt 2 zugeordnete Kegelsitzfläche 4 auf.

Zwischen Nabe 1 und Buchse 3 ist ein stufenförmiger zylindersitz 5 ausgebildet. In dem dargestellten Ausführungsbeispiel ist der Zylindersitz 5 dreistufig ausgeführt. Der Zylindersitz 5 ist dabei derart ausgebildet, dass vor der Montage von Nabe 1 und Buchse 3 auf dem Wellenendabschnitt 2 an der jeweiligen Stufe ein geringes Übermaß oder eine Übergangspassung vorhanden ist. Übermaß bedeutet hier, dass der Außendurchmesser der Buchse an der jeweiligen Stufe etwas größer ist als der zugehörige Innendurchmesser der Nabe. Durch Aufschieben der Buchse 3 mit der darauf sitzenden Nabe 1 auf den kegelförmigen Endabschnitt 2 der Welle wird die Buchse radial geweitet, so dass es zu einer kraftschlüssigen Klemmverbindung zwischen Buchse 3 und Welle 2 sowie zu einer kraftschlüssigen Klemmverbindung (Presspassung) zwischen Buchse 3 und Nabe 1 kommt.

Die Passungen an dem stufenförmigen Zylindersitz 5 sind unterschiedlich bemessen, und zwar derart, dass an einer Stufe (z.B. 5.2) des Zylindersitzes 5, die einem Nabenabschnitt gegenüberliegt, dessen mittlerer Außendurchmesser größer ist als der mittlere Außendurchmesser eines benachbarten Nabenabschnittes, der einer benachbarten Stufe 5.1 des Zylindersitzes 5 gegenüberliegt, ein Übermaß zwischen Nabe und Buchse vorhanden ist, welches kleiner als ein Übermaß zwischen Nabe und Buchse an der benachbarten Stufe 5.1 des Zylindersitzes 5 ist, die dem benachbarten Nabenabschnitt mit kleinerem mittleren Außendurchmesser gegenüberliegt. Die stufenförmige Gestaltung des zylindersitzes 5 bewirkt in Verbindung mit den unterschiedlichen Passungen eine Vergleichmäßigung der Flächenpressung im montierten Zustand von Buchse 3 und Nabe 1.

Die Stufenflächen 5,1, 5.2, 5.3 der Buchse 3 und/oder die daran reibschlüssig anliegenden Stufenflächen der Nabe 1 können mit einer Gleitbeschichtung versehen sein.

Der Zylindersitz 5 zwischen Nabe 1 und Buchse 3 sollte vorzugsweise so abgestuft sein, dass die axiale Tiefe der jeweiligen Stufe 5.1, 5.2, 5.3 mindestens das Dreifache der radialen Absatzhöhe H_{R} zur benachbarten Stufe beträgt. Bei dem in Fig. 1 dargestellten Ausführungsbeispiel beträgt die axiale Tiefe der jeweiligen Stufe 5.1, 5.2, 5.3 etwa das Fünf- bis Sechsfache der radialen Absatzhöhe H_{R} zur benachbarten Stufe.

Die Nabe 1 weist eine stufenförmig ausgebildete Außenmantelfläche 6 auf. Die Außenmantelfläche 6 der Nabe 1 und der Zylindersitz 5 zwischen Nabe 1 und Buchse 3 besitzen dabei die gleiche Anzahl an Stufen 5.1, 5.2, 5.3 und 6.1, 6.2, 6,3, wobei die Absatzkanten 7.1, 7.2 von einer Stufe zur nächsten Stufe am Zylindersitz 5 mit den Absatzkanten 8.1, 8.2 von einer Stufe zur nächsten Stufe an der Außenmantelfläche 6 fluchten. Die Abstufung ist so gewählt, dass die den kleinsten Durchmesser der Außenmantelfläche 6 definierenden Stufe 6.1 der den kleinsten Innendurchmesser definierende Stufe 5.1 des Zylindersitzes 5 gegenüberliegt.

Ferner ist zu erkennen, dass die Differenz zwischen Außendurchmesser und Innendurchmesser an der stufenförmigen Nabe 1 von ihrem kleinsten Innendurchmesser in Richtung ihres größten Innendurchmessers hin zunimmt. Die höchste Stufe 6.3 der Nabe 1 dient in dem Ausführungsbeispiel gemäß Fig. 1 als Anschlussflansch. Der Anschlussflansch ist einstückig an der Nabe 1 ausgebildet und weist mehrere auf einem gemeinsamen Kreis liegende Befestigungsbohrungen 9 auf, die gleichmäßig voneinander beabstazidet sind.

Das in Fig. 2 dargestellte Ausführungsbeispiel unterscheidet sich von dem zuvor beschriebenen Ausführungsbeispiel zunächst dadurch, dass die Stufe 5.1 des stufenförmigen Zylindersitzes 5, die den kleinsten Innendurchmesser der Nabe 1' bzw. den kleinsten Außendurchmesser der Buchse 3' definiert, nicht dem kleinsten Innendurchmesser der Buchse 3', sondern dem größten Innendurchmesser der Buchse 3' bzw. Kegelsitzfläche 4 gegenüberliegt. In Fig. 2 steigt der stufenförmige Zylindersitz 5 also in Richtung der Verjüngung des Kegelsitzes 4 an, während im Ausführungsbeispiel gemäß Fig. 1 die Stufen 5.1, 5,2, 5.3 des Zylindersitzes 5 in Richtung der Verjüngung des Kegelsitzes 4 abfallen.

Die Nabe 1' der erfindungsgemäßen Welle-Nabeverbindung ist in dem Ausführungsbeispiel gemäß Fig. 2 mit einer Außenverzahnung 10 versehen. Alternativ oder ergänzend kann die Nabe 1' aber auch einen Anschlußflansch mit Befestigungsbohrungen 9 wie in Fig. 1 aufweisen.

Der Buchse 3' ist in dem Ausführungsbeispiel gemäß Fig. 2 ein Sicherungselement 11 zugeordnet, das mit dem wellenende 2 durch eine Schraubverbindung lösbar verbindbar ist. Das Sicherungselement 11 ist deckelförmig ausgeführt, wobei etwa mittig eine Durchgangsöffnung 12 für einen Schraubbolzen 13 vorgesehen ist. Das Sicherungselement 11 hat einen umlaufenden Kragen 14, der das Wellenende 2 umgreift und beim Anziehen des Schraubbolzens 13 in axialer Richtung gegen die Stirnseite der Buchse 3' drückt.

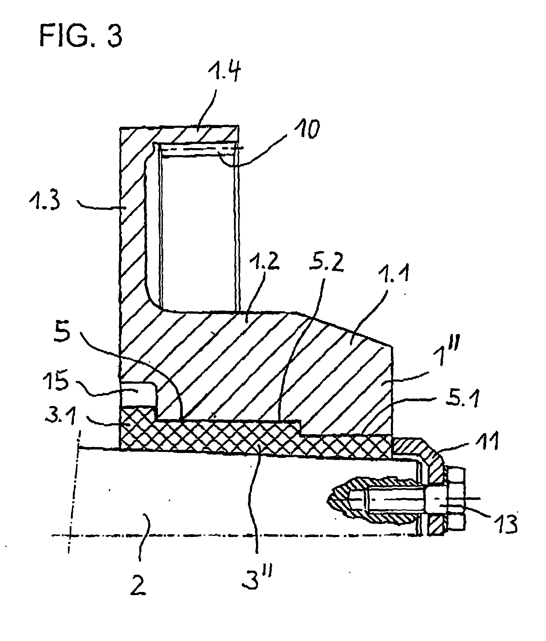

In Fig. 3 ist ein weiteres Ausführungsbeispiel der erfindungsgemäßen Welle-Nabeverbindung veranschaulicht. Der Zylindersitz 5 zwischen Nabe 1" und Buchse 3" ist hier zweistufig ausgebildet, Die Stufe 5.2 des Zylindersitzes 5 liegt einem Nabenabschnitt 1.2 gegenüber, dessen mittlerer Außendurchmesser größer ist als der mittlere Außendurchmesser des benachbarten Nabenabschnittes 1.1, welcher wiederum der benachbarten Stufe 5.1 des Zylindersitzes 5 gegenüberliegt. An den Stufen 5.1 und 5.2 des Zylindersitzes 5 ist jeweils ein Übermaß zwischen Nabe und Buchse vorhanden, wobei das Übermaß an der Stufe 5.2 kleiner als das Übermaß zwischen Nabe und Buchse an der benachbarten Stufe 5.1 ist.

Der Nabenabschnitt 1.1 besitzt eine kegelförmige Außenmantelfläche, während die Außenmantelfläche des Nabenabschnitts 1.1 im Wesentlichen zylindrisch ausgebildet ist. An dem Nabenabschnitt 1.2 ist ein Flansch 1.3 einstückig angeformt, der an seinem äußeren Ende einen umlaufenden Zylinderring 1.4 aufweist, an dessen Innenseite eine Innenverzahnung 10 ausgebildet ist.

Die Stufen 5.1 und 5.2 des Zylindersitzes 5 haben eine unterschiedliche axiale Tiefe. An der Buchse 3" ist ein radial nach außen vorstehender Kragen 3.1 ausgebildet, der sich an die Stufe 5.2 anschließt. Zwischen dem Kragen 3.1 und dem Flansch 1.3 der Nabe 1" ist eine umlaufende Aussparung 15 vorgesehen. Der Kragen 3.1 übt somit keine Flächenpressung auf den Flansch 1.3 aus.

Der Buchse 3" ist wiederum ein deckelförmiges Sicherungselement 11 zugeordnet, das beim Anziehen von Schraubbolzens 13 in axialer Richtung gegen die Stirnseite der Buchse 3" drückt.

Die erfindungsgemäße Welle-Nabeverbindung ist in ihrer Ausführung nicht auf die vorstehend beschriebenen Ausführungsbeispiele beschränkt. Vielmehr sind eine Reihe von Varianten denkbar, die auch bei grundsätzlich abweichender Gestaltung gleichwohl von der in den Ansprüchen wiedergegebenen Erfindung Gebrauch machen. So kann der Zylindersitz 5 zwischen Nabe 1, 1' und Buchse 3, 3' beispielsweise auch derart abgestuft werden, dass die Stufen unterschiedliche axiale Tiefen und/oder unterschiedliche radialen Absatzhöhen H_{R} aufweisen. In den dargestellten Ausführungsbeispielen sind die Aufnahmebohrung der Nabe 1, 1', 1" und die Außenmantelfläche der Buchse 3, 3', 3" zweistufig bzw, dreistufig ausgebildet. Die Anzahl der Stufen kann allerdings auch größer gewählt werden. Auch ist die Nabe hinsichtlich der Ausgestaltung ihrer Außenmantelfläche nicht auf die in der Zeichnung dargestellten Naben 3, 3', 3" beschränkt. Die Außenmantelfläche der Nabe der erfindungsgemäßen Welle-Nabeverbindung kann grundsätzlich beliebig gestaltet werden. Auch ist die Nabe nicht auf eine Nabe mit einem Anschlussflansch oder eine Nabe mit einer Verzahnung beschränkt.

## Patentansprüche

1. Welle-Nabeverbindung mit einer Nabe (1, 1', 1"), die einem kegelförmigen Endabschnitt (2) einer Welle zugeordnet ist und Nabenabschnitte mit unterschiedlichem mittleren Außendurchmesser aufweist, und einer ein Rutschmoment aufnehmenden Buchse (3, 3', 3"), die eine dem kegelförmigen Wellenendabschnitt (2) zugeordnete Kegelsitzfläche aufweist, wobei zwischen Nabe (1, 1', 1") und Buchse ein Zylindersitz ausgebildet ist und die Nabe und die Buchse im auf dem Wellenendabschnitt montierten Zustand kraftschlüssig miteinander verbunden sind,
**dadurch gekennzeichnet, dass**
der Zylindersitz zwischen Nabe (1, 1', 1") und Buchse (3, 3', 3") stufenförmig ausgebildet ist, derart, dass an einer Stufe (5.2) des Zylindersitzes (5), die einem Nabenabschnitt gegenüberliegt, dessen mittlerer Außendurchmesser größer ist als der mittlere Außendurchmesser eines benachbarten Nabenabschnittes, der einer benachbarten Stufe (5.1) des Zylindersitzes (5) gegenüberliegt, ein Übermaß zwischen Nabe und Buchse vorhanden ist, welches kleiner als ein Übermaß zwischen Nabe und Buchse an der benachbarten Stufe (5.1) des Zylindersitzes (5) ist, die dem benachbarten Nabenabschnitt mit kleinerem mittleren Außendurchmesser gegenüberliegt.

2. Welle-Nabeverbindung nach Anspruch 1,
**dadurch gekennzeichnet, dass** der Zylindersitz (5) zwischen Nabe (1, 1') und Buchse (3, 3') mindestens dreistufig ausgebildet ist.

3. Welle-Nabeverbindung nach Anspruch 1 oder 2,
**dadurch gekennzeichnet, dass** der Zylindersitz (5) zwischen Nabe (1, 1', 1") und Buchse (3, 3', 3") derart abgestuft ist, dass die axiale Tiefe der jeweiligen Stufe (5.1, 5.2, 5.3) mindestens das Dreifache der radialen Absatzhöhe (H_{R}) zur benachbarten Stufe beträgt.

4. Welle-Nabeverbindung nach einem der Ansprüche 1 bis 3,
**dadurch gekennzeichnet, dass** die Nabe (1") mindestens einen Nabenabschnitt umfasst, der eine kegelförmige Außenmantelfläche aufweist.

5. Welle-Nabeverbindung nach einem der Ansprüche 1 bis 4,
**dadurch gekennzeichnet, dass** die Nabe (1, 1') eine stufenförmig ausgebildete Außenmantelfläche (6) aufweist.

6. Welle-Nabeverbindung nach Anspruch 5,
**dadurch gekennzeichnet, dass** der Zylindersitz (5) zwischen Nabe (1, 1') und Buchse (3, 3') derart abgestuft ist, dass die den kleinsten Innendurchmesser der Nabe (1, 1') definierende Stufe (5.1) der den kleinsten Durchmesser der Außenmantelfläche (6) der Nabe (1, 1') definierenden Stufe (6.1) gegenüberliegt.

7. Welle-Nabeverbindung nach einem der Ansprüche 1 bis 6,
**dadurch gekennzeichnet, dass** die Außenmantelfläche (6) der Nabe (1, 1') und der Zylindersitz zwischen Nabe (1, 1') und Buchse die gleiche Anzahl an Stufen aufweisen.

8. Welle-Nabeverbindung nach einem der Ansprüche 5 bis 7,
**dadurch gekennzeichnet, dass** die Absatzkanten 7.1, 7.2) von einer Stufe (5.1, 5.2, 5.3) zur nächsten Stufe am Zylindersitz (5) der Nabe (1, 1') mit den Absatzkanten (8.1, 8.2) von einer Stufe zur nächsten Stufe (6.1, 6.2, 6.3) an der Außenmantelfläche (6) der Nabe (1, 1') fluchten.

9. Welle-Nabeverbindung nach einem der Ansprüche 1 bis 8,
**dadurch gekennzeichnet, dass**
die Differenz zwischen mittlerem Außendurchmesser und Innendurchmesser der Stufen der Nabe (1, 1') vom
kleinsten Innendurchmesser der Nabe (1, 1') zum größten Innendurchmesser der Nabe (1, 1') hin zunimmt.

10. Welle-Nabeverbindung nach einem der Ansprüche 1 bis 9,
**dadurch gekennzeichnet, dass** der Zylindersitz (5) zwischen Nabe (1, 1') und Buchse (3, 3') derart abgestuft ist, dass die Stufen (5.1, 5.2, 5.3) unterschiedliche axiale Tiefen und/oder unterschiedliche radialen Absatzhöhen (H_{R}) aufweisen.

11. Welle-Nabeverbindung nach einem der Ansprüche 1 bis 10,
**dadurch gekennzeichnet, dass**
die Nabe (1) einen Anschlussflansch mit mehreren Bohrungen (9) zur Aufnahme von Befestigungsschrauben aufweist.

12. Welle-Nabeverbindung nach einem der Ansprüche 1 bis 11,
**dadurch gekennzeichnet, dass**
die Nabe (1', 1'') eine Verzahnung (10) aufweist.

13. Welle-Nabeverbindung nach einem der Ansprüche 1 bis 12,
**dadurch gekennzeichnet, dass**
der Buchse (3', 3") ein Sicherungselement (11) zugeordnet ist, das mit dem Wellenendabschnitt (2) lösbar verbindbar ist.

## Claims

1. A shaft-hub connection comprising a hub (1, 1', 1"), which is assigned to a cone-shaped end section (2) of a shaft and which comprises hub sections comprising a different mean outer diameter, and a bushing (3, 3', 3") for absorbing a slip torque, said bushing comprising a cone seat, which is assigned to the cone-shaped shaft end section (2), wherein a cylinder seat is embodied between hub (1, 1', 1") and bushing and wherein the hub and the bushing are connected with one another in a force-fitting manner when assembled on the shaft end section,
**characterized in that** the cylinder seat between hub (1, 1', 1") and bushing (3, 3', 3") is embodied in a step-like manner such that an allowance for interference is present between hub and bushing on one step (5.2) of the cylinder seat (5), which is located opposite a hub section, the mean outer diameter of which is greater than the mean outer diameter of an adjacent hub section, which is located opposite an adjacent step (5.1) of the cylinder seat (5), said allowance for interference being less than an allowance for interference between hub and bushing at the adjacent step (5.1) of the cylinder seat (5), which is located opposite the adjacent hub section comprising the smaller mean outer diameter.

2. The shaft-hub connection according to claim 1,
**characterized in that** the cylinder seat (5) between hub (1, 1') and bushing (3, 3') is embodied to be at least three-stepped.

3. The shaft-hub connection according to claim 1 or 2,
**characterized in that** the cylinder seat (5) between hub (1, 1', 1") and bushing (3, 3', 3") is stepped in such a manner that the axial depth of the respective step (5.1, 5.2, 5.3) is at least three times as much as the radial shoulder height (H_{R}) to the adjacent step.

4. The shaft-hub connection according to one of claims 1 to 3,
**characterized in that** the hub (1") comprises at least one hub section, which has a cone-shaped outer jacket surface.

5. The shaft-hub connection according to one of claims 1 to 4,
**characterized in that** the hub (1, 1') comprises a step-shaped outer jacket surface (6).

6. The shaft-hub connection according to claim 5,
**characterized in that** the cylinder seat (5) between hub (1, 1') and bushing (3, 3') is stepped in such a manner that the step (5.1), which defines the smallest inner diameter of the hub (1, 1') is located opposite to the step (6.1), which defines the smallest diameter of the outer jacket surface (6) of the hub (1, 1').

7. The shaft-hub connection according to one of claims 1 to 6,
**characterized in that** the outer jacket surface (6) of the hub (1, 1') and the cylinder seat between hub (1, 1') and bushing comprise the same number of steps.

8. The shaft-hub connection according to one of claims 5 to 7,
**characterized in that** the shoulder edges (7.1, 7.2) from one step (5.1, 5.2, 5.3) to the next step at the cylinder seat (5) of the hub (1, 1') are aligned with the shoulder edges (8.1, 8.2) from one step to the next step (6.1, 6.2, 6.3) at the outer jacket surface (6) of the hub (1, 1').

9. The shaft-hub connection according to one of claims 1 to 8,
**characterized in that** the difference between mean outer diameter and inner diameter of the steps of the hub (1, 1') increases from the smallest inner diameter of the hub (1, 1') to the greatest inner diameter of the hub (1, 1').

10. The shaft-hub connection according to one of claims 1 to 9,
**characterized in that** the cylinder seat (5) between hub (1, 1') and bushing (3, 3') is stepped in such a manner that the steps (5.1, 5.2, 5.3) have different axial depths and/or different radial shoulder heights (H_{R}).

11. The shaft-hub connection according to one of claims 1 to 10,
**characterized in that** the hub (1) comprises a coupling flange comprising a plurality of bores (9) for accommodating fastening screws.

12. The shaft-hub connection according to one of claims 1 to 11,
**characterized in that** the hub (1', 1") comprises a toothing (10).

13. The shaft-hub connection according to one of claims 1 to 12,
**characterized in that** a securing element (11), which can be connected with the shaft end section (2) in a detachable manner, is assigned to the bushing (3', 3").

## Revendications

1. Liaison de moyeu d'arbre avec un moyeu (1, 1', 1"), qui est agencé sur un segment terminal conique (2) d'un arbre et qui présente segments de moyeu avec différents diamètres extérieurs moyens, et un coussinet (3, 3', 3") admettant un couple de glissement, qui présente une surface d'embase conique disposée sur le segment terminal conique de l'arbre (2), où entre le moyeu (1, 1', 1") et le coussinet, une embase de cylindre est formée et le moyeu et le coussinet sont reliés l'un avec l'autre en l'état monté sur le segment terminal de l'arbre,
**caractérisée en ce que** l'embase de cylindre est formée en gradins, entre le moyeu (1, 1', 1") et le coussinet (3, 3', 3"), de sorte que sur un gradin (5.2) de l'embase de cylindre (5), qui se trouve en face d'un segment de moyeu, dont le diamètre externe moyen est plus grand que le diamètre externe moyen d'un segment de moyeu voisin, qui se trouve en face d'un gradin voisin (5.1) de l'embase de cylindre (5), une surmesure entre le moyeu et le coussinet est présente, qui est inférieure à une surmesure entre le moyen et le coussinet sur le gradin voisin (5.1) de l'embase de cylindre, qui se trouve en face du segment de moyeu voisin avec un diamètre extérieur moyen plus faible.

2. Liaison de moyeu d'arbre selon la revendication 1, **caractérisée en ce que** l'embase de cylindre (5) est formée entre le moyeu (1, 1') et le coussinet (3, 3') avec au moins trois gradins.

3. Liaison de moyeu d'arbre selon la revendication 1 ou 2, **caractérisée en ce que** l'embase de cylindre (5) est formée en gradins entre le moyeu (1, 1', 1") et le coussinet (3, 3', 3") de sorte que la profondeur axiale de chaque gradin (5.1, 5.2, 5.3) est au moins le triple de la hauteur radiale du palier (H_{R}) du gradin voisin.

4. Liaison de moyeu d'arbre selon l'une des revendications 1 à 3, **caractérisée en ce que** le moyeu (1") comprend au moins un segment de moyeu, qui présente une surface conique du manteau extérieur.

5. Liaison de moyeu d'arbre selon l'une des revendications 1 à 4, **caractérisée en ce que** le moyeu (1, 1') présente une surface du manteau extérieur en forme de gradins.

6. Liaison de moyeu d'arbre selon la revendication 5, **caractérisée en ce que** l'embase de cylindre (5) est formée en gradins entre le moyeu (1, 1') et le coussinet (3, 3') de sorte que le gradin (5.1) définissant le diamètre interne le plus faible du moyeu (1, 1') se trouve en face du gradin (6.1) définissant le diamètre le plus faible de la surface de manteau extérieur (6) du moyeu (1, 1').

7. Liaison de moyeu d'arbre selon l'une des revendications 1 à 6, **caractérisée en ce que** la surface de manteau extérieur (6) du moyeu (1, 1') et l'embase de cylindre (6) entre le moyeu (1, 1') et le coussinet présentent le même nombre de gradins.

8. Liaison de moyeu d'arbre selon l'une des revendications 5 à 7, **caractérisée en ce que** les bords de palier (7.1, 7.2) d'un gradin (5.1, 5.2, 5.3) au gradin suivant sur l'embase du cylindre (5) du moyeu (1, 1') s'alignent avec les bords de palier (8.1, 8.2) d'un gradin au gradin suivant (6.1, 6.2, 6.3) sur la surface de manteau extérieur (6) du moyeu (1, 1').

9. Liaison de moyeu d'arbre selon l'une des revendications 1 à 8, **caractérisée en ce que** la différence entre le diamètre extérieur moyen et le diamètre intérieur des gradins du moyeu (1, 1') augmente du diamètre interne le plus faible du moyeu (1, 1') au diamètre interne le plus grand du moyeu (1, 1').

10. Liaison de moyeu d'arbre selon l'une des revendications 1 à 9, **caractérisée en ce que** l'embase de cylindre (5) est formée en gradins entre le moyeu (1, 1') et le coussinet (3, 3') de sorte que les gradins (5.1, 5.2, 5.3) présentent des profondeurs axiales différentes et/ou des hauteurs radiales de palier (H_{R}) différentes.

11. Liaison de moyeu d'arbre selon l'une des revendications 1 à 10, **caractérisée en ce que** le moyeu (1) présente une bride de raccord avec des forages (9) pour la réception de vis de fixation.

12. Liaison de moyeu d'arbre selon l'une des revendications 1 à 11, **caractérisée en ce que** le moyeu (1', 1'') présente une denture (10).

13. Liaison de moyeu d'arbre selon l'une des revendications 1 à 12, **caractérisée en ce que** le coussinet (3', 3'') est agencé sur un élément de sûreté (11), qui peut être relié de manière amovible au segment terminal d'arbre (2).
